(19) Europäisches Patentamt
European Patent Office
Office européen des brevets

(11) **EP 4 588 570 A1**

(12) **EUROPEAN PATENT APPLICATION**
published in accordance with Art. 153(4) EPC

(43) Date of publication:
**23.07.2025 Bulletin 2025/30**

(21) Application number: **23944845.9**

(22) Date of filing: **27.09.2023**

(51) International Patent Classification (IPC):
**B02C 4/02** *(2006.01)*    **B02C 4/30** *(2006.01)*
**B02C 4/28** *(2006.01)*    **B02C 25/00** *(2006.01)*

(52) Cooperative Patent Classification (CPC):
**Y02P 90/02**

(86) International application number:
**PCT/CN2023/121842**

(87) International publication number:
**WO 2025/010839 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.07.2023 CN 202310842044**

(71) Applicants:
• **CNBM (Hefei) Powder Technology Equipment
Co., Ltd.**
**Anhui 230051 (CN)**
• **Hefei Cement Research and Design Institute
Co., Ltd.**
**Hefei, Anhui 230000 (CN)**

• **China National Building Material Group Co., Ltd.**
**Beijing 100036 (CN)**
• **China Building Materials Academy Co., Ltd.**
**Beijing 100024 (CN)**

(72) Inventors:
• **GAO, Lin**
**Hefei, Anhui 230051 (CN)**
• **WU, Xianbin**
**Hefei, Anhui 230051 (CN)**
• **AN, Xiaopeng**
**Beijing 100036 (CN)**
• **YE, Jiayuan**
**Beijing 100024 (CN)**

(74) Representative: **Dantz, Jan Henning et al
Loesenbeck - Specht - Dantz
Patent- und Rechtsanwälte
Am Zwinger 2
33602 Bielefeld (DE)**

(54) **REAL-TIME MEASUREMENT SYSTEM AND MEASUREMENT METHOD FOR THROUGHPUT OF ROLLER PRESS**

(57) The present invention discloses a real-time detection system for detecting throughput of a roller press and a detection method. The detection system comprises a central control system, and a fixed roll profile measurement system, a movable roll profile measurement system, a fixed roll encoder, a movable roll encoder, and a DCS system, which are electrically connected to the central control system, respectively. In the detection method, the direct measurement method shown in formula (1) is improved, the displacement of the movable roll is considered, and a bulk density correction coefficient, a sliding correction coefficient, and a roll retraction correction coefficient are introduced to correct the calculated throughput. Compared with the direct measurement method in the prior art, the present invention can accurately obtain the real-time throughput of the roller press.

Fig. 1

EP 4 588 570 A1

## Description

### Technical Field

The present invention relates to the field of detection systems for roller presses, specifically to a real-time detection system and method for detecting throughput of a roller press.

### Background

The roller press is one of the core equipment of the "two grinding and one burning" process in cement production. The throughput of a roller press (i.e. the processing volume per hour) is a key indicator of the roller press equipment. Its value is directly related to the unit consumption (kWh/t) and extrusion effect of the roller press, and affects the stability of subsequent processes. It is one of the parameters that needs to be paid attention to during production. There are currently two methods for measuring the throughput of a roller press:

(1) Literature: Lu Baoshan. Effectively controlling the throughput of a roller press to improve roller pressing efficiency [J]. Cement, (2002(3):3. DOI:10.3969/j.issn.1002-9877.2002.03.012.), disclosed a direct measurement method. In the direct measurement method, it is assumed that the material is continuously extruded into a uniform and dense material cake after passing through the roller press. The volume of the material cake extruded per unit time is calculated and then multiplied by the bulk density of the material cake to obtain the throughput of the roller press. The calculation formula is as follows:

$$Q = 3600L \cdot v \cdot \rho \cdot S \qquad (1)$$

In formula (1): $Q$ is the throughput, in t/h; $L$ is the roll surface width, in m; $v$ is the roll linear speed, in m/s; $\rho$ is the bulk density of the material cake, in t/m$^3$; $S$ is the distance between the inner sides of the roll surfaces of the fixed roll and the movable roll in the horizontal plane of the roll axis, i.e., the roll gap (equal to the thickness of the material cake), in m. The size of the roll gap is measured by two displacement sensors installed on the bearing seats at the left and right ends of the shaft system of the roller press, which are the left roll gap and the right roll gap respectively. The average of the left and right roll gaps is taken as the average roll gap.

The defects of direct measurement method are:

1) The direct measurement method uses the bulk density of the material cake after extrusion. However, according to the physical meaning of formula (1), the bulk density should be the bulk density of the material cake just extruded by the roller press. Because the material cake is left for a period of time after extrusion, it will expand under the action of internal stress without the restraint of roll surface squeezing, resulting in a decrease in bulk density. If the bulk density measured by the material cake after being left for a period of time after extrusion is directly used, the result calculated by formula (1) will be smaller.

2) The direct measurement method assumes that there is no slip between the roll and the material cake, and the linear speed of the roll is equal to the speed at which the material cake is extruded. However, there is actually sliding between the roll surface and the material cake, and the speeds of the two are not completely equal.

3) The direct measurement method assumes that during the operation of the roller press, the roll gap in the roll width direction is uniform and constant, so the throughput at different positions in the roll width direction is the same. However, in the actual operation process, uneven wear of the roll surface (such as pits on the roll surface) will lead to an increase in the throughput of certain local roll surfaces in the roll width direction. At the same time, due to the working characteristics of the roller press, when the roll surface wears normally, the middle wear will be faster and the both sides will wear slower, resulting in a saddle-shaped roll surface. At this time, if the average value of the measurement values of the two displacement sensors installed on the bearing seats is used to measure the roll gap, a large error will occur.

(2) Literature: Shen Xirong, Gu Yuntao. Application of hyperbolic feeding device in precise control of cyclic load of roller press system [J]. Cement Technology, 2021(2):5, which discloses the indirect measurement method. The indirect measurement method is based on the conservation of energy. It is assumed that the material cake extruded by the roller press is lifted by the elevator, and all the active work done by the elevator is converted into the mechanical energy of the cake. The throughput of the roller press is calculated indirectly through the energy consumed by the cake elevator. The calculation formula is as follows:

$$Q = \frac{1.732(I - I_0)3600\eta_1 U \cos\phi}{gH + V_1^2/2 + V_2^2/2} \qquad (2)$$

In formula (2): $I$ is the elevator current, in A; $I_0$ is the no-load current of the elevator, in A; $\eta_1$, is the motor drive efficiency, dimensionless; $U$ is voltage, in V; $\cos\phi$ is the motor power coefficient, dimensionless; $g$ is the gravity acceleration, in m/s$^2$; $H$ is the lifting height, in m; $V_1$ is the discharge speed, i.e., the linear speed of the head wheel of the elevator, in m/s; $V_2$ is the feeding speed, i.e., the linear speed of the roll of the roller press, in m/s.
The defects of the direct measurement method are:

1) The driving efficiency of the motor in the calculation formula of the indirect measurement method is an estimated value and cannot be accurately measured, so the calculation result is biased;

2) After the elevator has been running for a period of time, the no-load current will slowly change due to increased resistance caused by wear of mechanical parts. At the same time, materials may stick to the elevator hopper, causing a significant change in the no-load current of the elevator. Therefore, this calculation formula cannot reflect the impact of changes in operating conditions in different time periods;

3) During operation, current fluctuations may occur due to uneven feeding at the feed port, blockage at the discharge port, belt deviation, internal jamming, etc. These reasons lead to the fact that the useful power done by the elevator is not all converted into the potential energy and kinetic energy of the material cake, and part of it is used to overcome the resistance, which makes the assumption of formula (2) invalid, and thus the calculation result is biased.

In summary, the prior art, whether direct measurement or indirect measurement, does not take into account the time-varying characteristics of certain factors in the production process, resulting in errors in the calculation results of the throughput.

**Summary**

The present invention provides a real-time detection system and detection method for detecting throughput of a roller press to solve the problem of inaccurate measurement results existing in the direct measurement method in the prior art.
To achieve the above object, the technical solution adopted by the present invention is:

A real-time detection system for detecting throughput of a roller press, comprising a central control system, a fixed roll profile measurement system, a movable roll profile measurement system, a fixed roll encoder, a movable roll encoder, and a DCS system;

wherein the fixed roll profile measurement system and the movable roll profile measurement system are electrically connected to the central control system, respectively, wherein the fixed roll profile measurement system collects a profile image of a fixed roll in the roller press, and the movable roll profile measurement system collects a profile image of a movable roll in the roller press, wherein the roll surface profile images collected by the fixed roll profile measurement system and the movable roll profile measurement system are sent to the central control system, respectively;

wherein the fixed roll encoder and the movable roll encoder are electrically connected to the central control system, respectively, wherein the fixed roll encoder collects a real-time rotation angle of the fixed roll, and the movable roll encoder collects a real-time rotation angle of the movable roll, wherein the rotation angles collected by the fixed roll encoder and the movable roll encoder are sent to the central control system, respectively;

wherein the DCS system is electrically connected to the central control system, and connected to a displacement sensor of the movable roll of the roller press to obtain a real-time horizontal displacement of the movable roll and send it to the central control system.

Furthermore, the fixed roll encoder and the movable roll encoder are both absolute value encoders.
A real-time detection method for detecting throughput of a roller press based on the above mentioned real-time detection system for detecting throughput of a roller press, comprising the following steps:

step 1: using the fixed roll profile measurement system to collect a profile image of the fixed roll, using the movable roll profile measurement system to collect a profile image of the movable roll, and calculating a roll gap and a roll gap area in the working pressure zones of the fixed roll and the movable roll at moment $t$ by combining a real-time horizontal displacement data of the movable roll and an initial radius of a roll surface;

step 2: comparing the roll gap calculated in step 1 with a preset threshold at moment $t$, and using the following formula to calculate a real-time throughput $Q$, of the roller press at moment $t$ when the roll gap is less than or equal to the preset threshold:

$$Q_t = 3600 \cdot k_1 \cdot \rho \cdot k_2 \cdot v \cdot A_t$$

using the following formula to calculate the real-time throughput $Q$, of the roller press at moment $t$ when the roll gap is greater than the preset threshold:

$$Q_t = k_3 \cdot 3600 \cdot k_1 \cdot \rho \cdot k_2 \cdot v \cdot A_{t0}$$

wherein $v$ is the linear speed of the rotating roll, wherein the linear speed of the fixed roll is the same as that of the movable roll; $\rho$ is the bulk density of the material cake; $A_t$ is the roll gap area between the working pressure zones of the fixed roll and the movable roll at moment $t$ calculated based on step 1, that is, the roll gap area enclosed by the two rolls in the horizontal plane passing through the two roll axes; $A_{t0}$ is the roll gap area between the working pressure zones of the fixed roll and the movable roll at the moment $t_0$ closest to time $t$ calculated based on step 1, wherein the real-time roll gap at the moment $t_0$ is not greater than the preset threshold, i.e. a maximum allowable roll gap.

$k_1$ is a bulk density correction coefficient, $k_2$ is a sliding correction coefficient, $k_3$ is a roll retraction correction coefficient, which are all obtained from experiments.

Furthermore, in step 1, the roll gap area is calculated according to the following formula:

$$A_t = \sum_{i=1}^{p} \left[ g_t \right]_i \cdot \frac{l}{p}$$

wherein $A_t$ is a roll gap area at moment $t$, $p$ is the number of row pixels in the profile image of the fixed roll or the profile image of the movable roll; $l$ is a width of the fixed roll or the movable roll;

gt is a real-time roll gap between the roll surfaces in the working pressure zones of the fixed roll and the movable roll at moment $t$; $[g_t]$ represents a one-dimensional array that stores a roll gap value at moment $t$; $[g_t]_i$ represents an average roll gap size at the i-th partition when the roll surface is partitioned every $\dfrac{l}{p}$ width in the roll width direction at moment $t$; $[g_t]$ is calculated based on an original radius of the fixed roll and the movable roll, a real-time horizontal displacement of the movable roll, the profile image of the fixed roll and the profile image of the movable roll.

Furthermore, step 2 further comprises calculating a cumulative throughput $\Delta Q$ of the roller press within the time period $t_1 \sim t_2$, the formula is as follows:

$$\Delta Q = \sum_{i=0}^{\frac{t2-t1}{\Delta t}-1} Q_{t1+i\cdot\Delta t} \cdot \Delta t$$

wherein $Q_{t1+i\cdot\Delta t}$ represents a real-time throughput of the roller press at moment $t1+i\cdot\Delta1$ . $\Delta t$ is a sampling period of the real-time detection system for detecting throughput of a roller press, and the smaller $\Delta t$ is, the higher the calculation accuracy of $\Delta Q$ is.

The present invention improves the direct measurement method shown in formula (1). The main reason for the error in formula (1) is that during the operation of the roller press, the change in the roll gap and the uneven wear on the roll surface cause the thickness of the material cake to change along the direction of the roll width. If the roll gaps at various locations in the roll width direction can be measured in real time, the throughput of the roller press at any instant can be calculated, and then the throughput of the roller press in any time period can be calculated by integrating with respect to time. Based on this, the present invention provides a real-time detection system and detection method for detecting throughput of a roller press.

The present invention improves the calculation accuracy of the direct measurement method of formula (1) for detecting throughput of a roller press, which is mainly reflected in:

1. Considering the uneven wear of the roll surface after long-term operation, which leads to the change of the roll gap, and the floating change of the roll gap when the roller press is working normally, which leads to the thickness of the material cake along the direction of the roll width is no longer a fixed value, a device and calculation method for real-time measurement of the real-time roll gap and roll gap area at various locations in the roll width direction of the working pressure zone of the two rolls are provided, so that the throughput of the roller press can be accurately calculated, replacing the previous method of calculating the throughput by fixing the roll gap.

2. Considering the changes in bulk density of the material cake during and after extrusion, a bulk density correction coefficient of the material cake is provided to correct the bulk density error of the material cake.

3. The situation where the sliding between the roll surface and the material cake causes the linear velocity of the roll surface to be inconsistent with the material cake speed is considered, and a sliding correction coefficient is provided to correct the linear velocity error of the rolls.

4. Considering that when the roller press is working normally, a roll retraction may occur when encountering large material particle, and the roll gap and the bulk density of the material cake will change, which has a non-negligible impact on the calculation of the throughput, a roll retraction correction coefficient is proposed to correct the roll retreating error.

## BRIEF DESCRIPTION OF THE DRAWINGS

FIG. 1 is a schematic diagram of the structure of a detection system according to a first embodiment of the present invention;

FIG. 2 is a two-dimensional unfolded diagram of the scanning result of the fixed roll surface profile in a second embodiment of the present invention; and

FIG. 3 is a schematic top view of the roll surface of the roller press in the second embodiment of the present invention.

## DETAILED DESCRIPTION OF EMBODIMENTS

The present invention is further described below with reference to the accompanying drawings and embodiments.

Embodiment 1

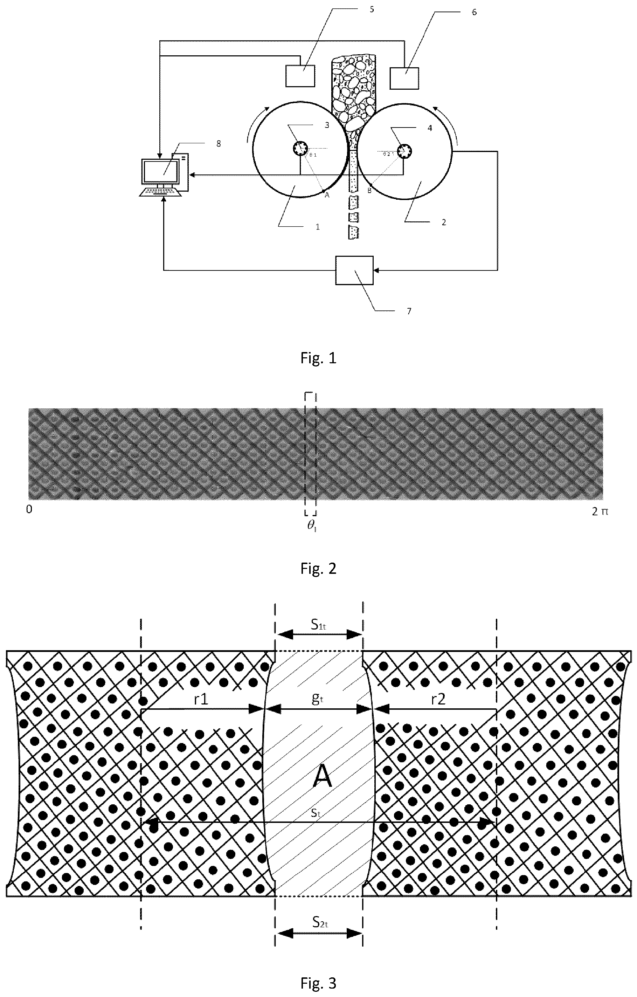

As shown in Fig. 1, this embodiment discloses a real-time detection system for detecting throughput of a roller press, comprising a central control system 8, a fixed roll profile measurement system 5, a movable roll profile measurement system 6, a fixed roll encoder 3, a movable roll encoder 4, and a DCS system 7. The fixed roll profile measurement system 5, the movable roll profile measurement system 6, the fixed roll encoder 3, the movable roll encoder 4, and the DCS system 7 are electrically connected to the central control system, respectively.

The fixed roll profile measurement system 5 collects a roll surface profile image of the fixed roll 1 in the roller press, and the movable roll profile measurement system 6 collects a roll surface profile image of the movable roll 2 in the roller press. The roll surface profile images collected by the fixed roll profile measurement system 5 and the movable roll profile measurement system 6 are sent to the central control system 8, respectively.

The fixed roll encoder 3 and the movable roll encoder 4 are both absolute value encoders. The fixed roll encoder 3 collects a real-time rotation angle of the fixed roll 1, and the movable roll encoder 4 collects a real-time rotation angle of the movable roll 2. The rotation angles collected by the fixed roll encoder 3 and the movable roll encoder 4 are sent to the central control system 8, respectively;

The DCS system 7 is connected to a displacement sensor of the movable roll of the roller press to obtain a real-time horizontal displacement of the movable roll 2 and send it to the central control system 8. Generally, there are two movable roll displacement sensors, which are installed on the left and right sides of the movable roll to detect a real-time horizontal displacement at the left and right end surfaces of the movable roll, respectively.

In this embodiment, the fixed roll encoder 3 is coaxially mounted on the center of the side end surface of the fixed roll 1 of the roller press. The horizontal plane passing through the axis of the fixed roll 1 is defined as 0 plane. The rotation direction of the fixed roll 1 is the positive direction. The angular speed of the fixed roll 1 is $\omega_1$. When installing the fixed roll encoder 3 of the roller press, the 0° direction of the fixed roll encoder 3 is adjusted to the horizontal line passing through the center of the side end surface of the fixed roll 1, facing the side of the movable roll 2, and the intersection point of the horizontal line and the outer circumference of the fixed roll 1 is A. After the time $\Delta t$ has elapsed, a rotation angle $\theta_1$ of the fixed roll 1 is detected by the fixed roll encoder 3, $\theta_1$ is an angle between the line connecting point A and the center of the side end surface of the fixed roll 1 and the horizontal line.

Correspondingly, the movable roll encoder 4 is coaxially installed at the center of an end surface of the movable roll 2 of the roller press, and the horizontal plane passing through the axis of the movable roll 4 is defined as 0 plane. The rotation direction of the movable roll 4 is the positive direction, and the angular speed of the rotation of the movable roll 4 is $\omega_2$. When installing the movable roll encoder 4, the 0° direction of the movable roll encoder 4 is adjusted to the horizontal line passing through the center of the side end surface of the movable roll 4, facing the side of the fixed roll 3, and the intersection point of the horizontal line and the outer circumference of the fixed roll 1 is B. After the time $\Delta t$ has elapsed, a rotation angle $\theta_2$ of the movable roll 2 is detected by the movable roll encoder 4, $\theta_2$ is an angle between the line connecting point B and the center of the side end surface of the movable roll 4 and the horizontal line.

The working principles of the fixed roll profile measurement system 5 and the movable roll profile measurement system 6 are described in the patent with the title "A roll surface automatic detection device and detection method for roller press" (Application No. CN202010203566.X, Publication (Issue) No. CN111239144A) in detail. The measurement system can take pictures of the roll surface profile image, obtain roll surface point cloud data, and reconstruct the true three-dimensional profile image of the roll surface.

Embodiment 2

This embodiment discloses a real-time detection method for detecting throughput of a roller press based on the real-time detection system for detecting throughput of a roller press according to Embodiment 1, comprising the following steps:

step 1: using the fixed roll profile measurement system 5 to collect a profile image of the fixed roll 1, using the movable roll profile measurement system 6 to collect a profile image of the movable roll 2, and calculating a roll gap and a roll gap area in the working pressure zones of the fixed roll 1 and the movable roll 2 at moment $t$ by combining a real-time horizontal displacement data of the movable roll 2 and an initial radius of a roll surface; The process is as follows:

First, based on the profile image of the fixed roll 1 and the profile image of the movable roll 2, the corresponding roll surface height of the roll surface pressure area of the fixed roll 1 along the roll width direction and the corresponding roll surface height of the roll surface pressure area of the movable roll 2 along the roll width direction are obtained, respectively.

The coordinate correspondence between the image captured by the fixed roll profile measurement system 5 and the roll profile is illustrated as follows: Fig. 2 shows a two-dimensional expanded view of scanning results of the roll surface profile of the fixed roll 1 scanned by the fixed roll profile measurement system 5. In the image, the pixel grayscale value corresponds to the height of the roll surface of the fixed roll 1, the horizontal coordinate of the image corresponds to the roll circumferential direction of the fixed roll 1, and the vertical coordinate of the image corresponds to the roll width direction of the fixed roll 1.

Assuming that the number of row pixels of the two-dimensional profile image of the fixed roll 1 obtained by the central control system 8 is $p$, the number of column pixels is $q$, the radius of fixed roll 1 is $r$, the width is $l$, then the distance resolution of the image in the roll width direction of the fixed roll 1 is $\dfrac{l}{p}$, and the distance resolution in the roll circumferential direction is $\dfrac{2\pi r}{q}$.

Assuming that the angular resolution of the fixed roll encoder 3 is $\delta$, the two-dimensional expansion diagram of the fixed roll 1 is evenly divided on the horizontal axis, and a total of $\dfrac{2\pi}{\delta}$ images can be equally divided.

Assuming that at moment $t$, the fixed roll encoder 3 detects that the rotation angle of the fixed roll 1 is $\theta_1$, the pressure area of the fixed roll 1 (the 0° direction of the fixed roll) corresponds to the $\dfrac{\theta_1}{\delta}$ th image of the fixed roll 1 in the abscissa direction of the two-dimensional expansion diagram.

It can be calculated that the number of pixels of the $\dfrac{\theta_1}{\delta}$ th image is $p \times \dfrac{q\delta}{2\pi}$, the grayscale of the pixels in the column $\dfrac{q\delta}{2\pi}$ is averaged by row, becoming an image with $p \times 1$ columns of pixels, using an array

$$Array1 = \begin{bmatrix} r1_1 \\ r1_2 \\ \ldots \\ r1_p \end{bmatrix}$$

to store the corresponding roll radius of the fixed roll 1 in the working pressure zone every $\dfrac{l}{p}$ width along the roll width direction after the fixed roll 1 rotates by angle $\theta_1$.

Similarly, the roll surface radius of the movable roll 2 in the working pressure zone every $\dfrac{l}{p}$ width along the roll width direction after the movable roll 2 rotates by angle $\theta_2$, and its corresponding array

$$Array2 = \begin{bmatrix} r2_1 \\ r2_2 \\ \ldots \\ r2_p \end{bmatrix}$$

, can be obtained.

In this embodiment, the shooting frame rates of the fixed roll profile measurement system 5 and the movable roll profile measurement system 6 are adjustable, that is, the value $q$ is adjustable, and during adjustment, $q$ should satisfy:

$$q = n\frac{2\pi}{\delta}$$

,$n$= 1, 2, 3..., the larger the $n$, the higher the resolution.

FIG. 3 is a schematic top view of the roll surface of the roller press. It can be seen from the schematic view that after a period of work wear, the overall shape of the roll surface is saddle-shaped. Assuming that the initial radius of the fixed roll 1 and the movable roll 2 is $r$, when working with materials, the central control system 8 reads the real-time horizontal displacement of the movable roll 2 from the DCS system 7 at moment $t$. The horizontal displacement of the left side of the movable roll is $s_{1t}$, and the horizontal displacement of the right side of the movable roll is $s_{2t}$. Obviously, the real-time horizontal displacement of the left and right sides of the movable roll changes linearly along the roll width direction. Therefore, the real-time distance between the roll axes of the fixed roll 1 and the movable roll 2 along the roll width direction

$$s_t = 2r + \begin{bmatrix} s_{1t} \\ \ldots \\ s_{1t} + \dfrac{i\cdot(s_{2t}-s_{1t})}{p} \\ \ldots \\ s_{2t} \end{bmatrix}$$

for every width $\dfrac{l}{p}$ is , where $i$ = 1,2,...,$p$. According to the positional relationship shown in Fig. 3, the real-time distance between the roll surfaces in the working pressure zones of the fixed roll 1 and the

$$g_t = \begin{bmatrix} g_1 \\ g_2 \\ \dots \\ g_p \end{bmatrix}$$

movable roll 2 at moment $t$ is $g_t = s_t$ - *Array*1-*Array*2. Obviously, $\begin{bmatrix} g_1 \\ g_2 \\ \dots \\ g_p \end{bmatrix}$, which is an array of $p \times 1$, and each element in the array corresponds to the roll gap value every $\dfrac{l}{p}$ widths in the roll width direction at moment $t$.

$$A_t = \sum_{i=1}^{p} [g_t]_i \cdot \frac{l}{p}$$

By integrating the roll gap between the two rolls, the roll gap area $\qquad$ between the working pressure zones of the two rolls at moment $t$ is obtained. Therefore, by substituting different moments, the roll gaps in the working pressure zones of the fixed roll 1 and the movable roll 2 at different moments can be obtained.

In this embodiment, the uneven wear of the roll surface in the roll width direction is taken into account. By calculating the real-time roll gap $g_t$ at different roll widths at different moments, the real-time high-precision roll gap area $A_t$ is obtained to improve the accuracy of subsequent calculation of the throughput of the roller press.

Step 2: comparing the roll gap calculated in step 1 with the preset threshold at moment $t$, and calculating the real-time throughput and cumulative throughput of the roller press based on the comparison result.

In formula (1), $Q = 3600L \cdot v \cdot \rho \cdot S$, the roll gap $S$ is considered to be a constant, and then $L \cdot S$ is used to calculate the roll gap area between the two rolls. However, in theory, the calculation accuracy of the throughput $Q$ in formula (1) can be further improved by compensation correction:

1) $\rho$ used in formula (1) is the bulk density of the material cake after extrusion. However, according to the physical meaning of formula (1), the bulk density of the material cake during extrusion at the roll gap should be taken. Therefore, in this embodiment, the bulk density correction coefficient $k_1$ is used for correction. The process of determining the bulk density correction coefficient $k_1$ is as follows:

The bulk density correction coefficient $k_1$ can be determined by a pressure test: A certain mass of material is placed in a container and pressurized by a press. When the working pressure of the press is equal to the working pressure of the roller press, the press block is controlled to stop moving downward, the pressure is maintained, and the material height $h_1$ at this time is recorded. Then the press block is controlled to move upward to relieve the pressure on the material. At this time, the material begins to expand upward. After standing for a period of time, the material stops expanding and

$$k_1 = \frac{h_2}{h_1}$$

the height of the material at this time is recorded $h_2$, then the bulk density correction coefficient is $\qquad$. During the experiment, different pressure values of the press can be used to obtain different bulk density correction coefficients $k_1$. If the bulk density correction is not considered, $k_1 = 1$.

2) Since formula (1) assumes that the speed of the material cake passing through the rolls is the linear speed $v$ of the rolls, that is, by default, there is no slippage between the roll and the material cake. In fact, there may be slippage between the material cake and the roll surface, resulting in unequal linear speeds between the two, which needs to be corrected using the slip correction coefficient $k_2$. In this embodiment, the value of $k_2$ can be determined through experiments, and the process is as follows:

Material with known mass $M$ and uniform particle size is prepared. The roll surface of the experimental roller press is uniform, and the roll spacing along the roll width direction can be assumed to be equal during production. According to the working pressure of the roller press set during the experiment, select the appropriate bulk density correction coefficient $k_1$. Since the material particle size is uniform and the roll surface wear is uniform, it can be assumed that the roll runs smoothly during operation, that is, the roll gap $S$, the bulk density of the material cake $\rho$ remain at fixed values. Assuming the roll width is $L$, after a certain period of time $T$, the material is extruded by the roller press, and the falling speed of the material cake is calculated using formula (1):

$$v_1 = \frac{M}{T \cdot L \cdot S \cdot k_1 \cdot \rho}$$

On the other hand, the linear speed $v_2$ of the roll rotation is manually set and known, so the slip correction

$$k_2 = \frac{v_1}{v_2}$$

coefficient can be calculated. By changing different types of materials and roll surfaces with different degrees of wear, it is possible to determine the value range of $k_2$. If the sliding correction of the material cake is not considered, $k_2 = 1$.

3) Formula (1) assumes that during the roller press extrusion process, the bulk density of the material cake $\rho$ and the roll spacing $S$ are constant. This assumption is approximately valid when the particle size of the material is relatively uniform. However, in actual production, materials are uneven in size and often contain large particles. The pressure system of the roller press can be regarded as a spring. During normal production, its pressure value and roll gap fluctuate within a certain range. When encountering large particles, the reaction force of the material on the roll surface increases, the hydraulic system of the roller press is equivalent to the spring being compressed, and the pressure of the hydraulic cylinder increases. When the hydraulic pressure increases to a certain level, the hydraulic oil in the hydraulic cylinder overflows into an accumulator, causing the movable roll of the roller press to retract. When large particles pass through, the pressure in the hydraulic cylinder drops, and the accumulator injects pressurized oil into the hydraulic system. The pressure in the hydraulic system gradually returns to normal, which is equivalent to the release of the spring, causing the movable roll of the roller press to advance.

In the above process, the roll gap $S$ of the roller press fluctuates with the hydraulic pressure. When the roll gap $S$ is greater than a certain value $S_{max}$, the bulk density of the material cake $\rho$ will become smaller. Although the above-mentioned pressure relief process of the roll retraction is very short, the bulk density $\rho$ and roll gap $S$ of the material cake quickly return to normal values, which generally does not cause obvious deviation in the throughput $Q$ calculated by formula (1). However, if the material quality is very poor (the material particle size is uneven and there are many large particles), the roll will frequently retract, causing the roll gap $S > S_{max}$ and the bulk density $\rho$ of the material cake to become smaller. In this case, the throughput $Q$ calculated by formula (1) will have a non-negligible deviation. Therefore, this embodiment performs correction by determining the correction coefficient $k_3$ of the roll retraction, and the process of determining the correction coefficient $k_3$ of the roll retraction is as follows:

Material of known quality $M$ and uneven thickness is taken for production tests. The roll surface of the experimental roller press was uniform, and during production, it can be assumed that the roll gap along the roll width direction is equal. According to the working conditions of the roller press during experiment, select the appropriate bulk density correction coefficient $k_1$ and sliding correction coefficient $k_2$.

A maximum allowable roll gap $S_{max}$ is set. Assuming that during the production process, when the roll gap $S \leq S_{max}$, the main material produced is small particles, the roll gap $S$ changes within a small range, the bulk density $\rho$ of the material cake is approximately unchanged, and the effect of roll retraction on the calculated throughput $Q$ can be ignored. At this time, the roll gap $S$ and the bulk density $\rho$ of the material cake are considered to be fixed values. When $S > S_{max}$, the material produced is large-particle material, the roll gap $S$ is larger, and the bulk density $\rho$ of the material cake becomes smaller, and the effect of the roll retraction on the calculated throughput $Q$ cannot be ignored. During the experiment, it is assumed that the cumulative duration of $S \leq S_{max}$ is $T_1$ and the cumulative duration of $S > S_{max}$ is $T_2$.

According to the conservation of material mass, formula (1) gives:

$$M = 3600 \cdot L \cdot k_2 \cdot v \cdot k_1 \cdot \rho \cdot S \cdot T_1 + k_3 \cdot 3600 \cdot L \cdot k_2 \cdot v \cdot k_1 \cdot \rho \cdot S \cdot T_2$$

$$k_3 = \frac{M - 3600 \cdot L \cdot k_2 \cdot v \cdot k_1 \cdot \rho \cdot S \cdot T_1}{3600 \cdot L \cdot k_2 \cdot v \cdot k_1 \cdot \rho \cdot S \cdot T_2}$$

can be calculated, and different $k_3$ will be obtained by conducting experiments on materials of different grades and uneven coarseness and fineness. If the roll retraction correction is not considered, $k_3 = 1$.

In summary, in this embodiment, according to the working conditions of the roller press, suitable bulk density correction coefficient $k_1$, sliding correction coefficient $k_2$, and roll retraction correction coefficient $k_3$ are selected for compensation correction.

Specifically, the calculation process of the real-time throughput $Q_t$ (unit: t/h) of the roller press at moment $t$ using the correction coefficient for compensation correction in this embodiment is described as follows:

In the central control system 8, the sampling period for the system to detect the angles of the fixed roll 1 and the movable roll

$$\Delta t = n \cdot \frac{\delta}{\omega}$$

2 is set to $\Delta t$ ( , $n = 1, 2, 3...$). $\delta$ is the angular resolution of the encoder; $\omega$ is the angular velocity of the fixed roll 1 and the movable roll 2; $n$ can be selected as 1, 2, 3, ... etc. as needed. Theoretically, the smaller the value of $n$ is, the higher the accuracy of calculating the throughput of the roller press; the maximum value $s_{max}$ of the allowable roll gap is set. When the real-time roll gap $s_t \leq s_{max}$, it is considered that the effect of the roll retraction of the roller press on the calculated throughput can be ignored, and the bulk density $\rho$ of the extruded material cake is constant. When the real-time roll gap $s_t >$ $s_{max}$, it is considered that the effect of the roll retraction of the roller press on the calculated throughput cannot be ignored, and the roll gap $S$ and the bulk density $\rho$ of the material cake in formula (1) have changed.

At moment $t$, if the real-time roll gap of the roller press is $s_t \leq s_{max}$, then at moment $t$, the real-time throughput of the roller press is $Q_t = 3600 \cdot k_1 \cdot \rho \cdot k_2 \cdot v \cdot A_t$.

At moment $t$, if the real-time roll gap of the roller press is $s_t > s_{max}$, then at moment $t$, the real-time throughput of the roller press is $Q_t = k_3 \cdot 3600 \cdot k_1 \cdot \rho \cdot k_2 \cdot v \cdot A_{t0}$. Here, $A_{t0}$, is the roll gap between the two rolls at moment $t_0$, which is closest to time $t$, and the roll gap $s_{t0} \leq s_{max}$ at moment $t_0$.

In this embodiment, after the real-time throughput is obtained, the cumulative throughput $\Delta Q$ (unit: tons) is

$$\Delta Q = \sum_{i=0}^{\frac{t2-t1}{\Delta t}-1} Q_{t1+i \cdot \Delta t} \cdot \Delta t$$

calculated. During the time period $t_1$~$t_2$, the cumulative throughput of the roller press is                    ,
wherein $Q_{t1+i \cdot \Delta t}$ represents a real-time throughput of the roller press at moment $t1+i \cdot \Delta t$. $\Delta t$ is a sampling period of the real-time detection system for detecting throughput of a roller press, the smaller $\Delta t$ is, the higher the calculation accuracy of $\Delta Q$ is. If $t_2 - t_1 = 1h$, then numerically the throughput of the roller press is $Q = \Delta Q$.

The preferred embodiments of the present invention are described in detail above in conjunction with the accompanying drawings. The embodiments described in the present invention are only descriptions of the preferred embodiments of the present invention, and do not limit the concept and scope of the present invention. The various specific technical features described in the above specific embodiments can be combined in any suitable manner as long as there is no contradiction. Such a combination should also be regarded as the content disclosed in this disclosure as long as it does not deviate the idea of the present invention. To avoid unnecessary repetition, the present invention will not further explain various possible combinations.

The present invention is not limited to the specific details of the above embodiments. Within the scope of the technical concept of the present invention and without departing from the design ideas of the present invention, various modifications and improvements made by those skilled in the art to the technical solutions of the present invention are all should fall within the protection scope of the present invention. The technical contents requested for protection by the present invention have all been covered in the claims.

**Claims**

1. A real-time detection system for detecting throughput of a roller press, **characterized by** comprising a central control system, a fixed roll profile measurement system, a movable roll profile measurement system, a fixed roll encoder, a movable roll encoder, and a DCS system;

   wherein the fixed roll profile measurement system and the movable roll profile measurement system are electrically connected to the central control system, respectively, wherein the fixed roll profile measurement system collects a profile image of a fixed roll in the roller press, and the movable roll profile measurement system collects a profile image of a movable roll in the roller press, wherein the roll surface profile images collected by the fixed roll profile measurement system and the movable roll profile measurement system are sent to the central control system, respectively;
   wherein the fixed roll encoder and the movable roll encoder are electrically connected to the central control system, respectively, wherein the fixed roll encoder collects a real-time rotation angle of the fixed roll, and the movable roll encoder collects a real-time rotation angle of the movable roll, wherein the rotation angles collected by the fixed roll encoder and the movable roll encoder are sent to the central control system, respectively;
   wherein the DCS system is electrically connected to the central control system, and connected to a displacement sensor of the movable roll of the roller press to obtain a real-time horizontal displacement of the movable roll and send it to the central control system.

2. The real-time detection system for detecting throughput of a roller press according to claim 1, **characterized in that** the fixed roll encoder and the movable roll encoder are both absolute value encoders.

3. A real-time detection method for detecting throughput of a roller press based on the real-time detection system for detecting throughput of a roller press according to claim 1 or 2, **characterized by** comprising the following steps:

   step 1: using the fixed roll profile measurement system to collect a profile image of the fixed roll, using the movable roll profile measurement system to collect a profile image of the movable roll, and calculating a roll gap and a roll gap area in the working pressure zones of the fixed roll and the movable roll at moment $t$ by combining a real-time horizontal displacement data of the movable roll and an initial radius of a roll surface;

Step 2: comparing the roll gap calculated in step 1 with a preset threshold at moment $t$, and using the following formula to calculate a real-time throughput $Q$, of the roller press at moment $t$ when the roll gap is less than or equal to the preset threshold:

$$Q_t = 3600 \cdot k_1 \cdot \rho \cdot k_2 \cdot v \cdot A_t$$

using the following formula to calculate the real-time throughput $t$ of the roller press at moment $Q_t$ when the roll gap is greater than the preset threshold:

$$Q_t = k_3 \cdot 3600 \cdot k_1 \cdot \rho \cdot k_2 \cdot v \cdot A_{t0}$$

wherein $v$ is the linear speed of the rotating roll, and the linear speed of the fixed roll is the same as that of the movable roll; $\rho$ is the bulk density of the material cake; $A_t$ is the roll gap area between the working pressure zones of the fixed roll and the movable roll at moment $t$ calculated based on step 1, that is, the roll gap area enclosed by the inner sides of the two rolls in the horizontal plane passing through the two roll axes; $A_{t0}$ is the roll gap area between the working pressure zones of the fixed roll and the movable roll at the moment $t_0$ closest to time $t$ calculated based on step 1, wherein the roll gap at the moment $t_0$ is not greater than the preset threshold, i.e. a maximum allowable roll gap;

$k_1$ is a bulk density correction coefficient, $k_2$ is a sliding correction coefficient, $k_3$ is a roll retraction correction coefficient, which are obtained from experiments.

4.  The real-time detection method for detecting throughput of a roller press according to claim 3, **characterized in that** in step 1, the roll gap area is calculated according to the following formula:

$$A_t = \sum_{i=1}^{p} [g_t]_i \cdot \frac{l}{p}$$

wherein $A_t$ is a roll gap area at moment $t$, $p$ is the number of row pixels in the profile image of the fixed roll or the profile image of the movable roll; $l$ is the roll surface width of the fixed roll or the movable roll;

gt is a real-time roll gap between the roll surfaces in the working pressure zones of the fixed roll and the movable roll at moment $t$; $[g_t]$ represents a one-dimensional array that stores a roll gap value at moment $t$; $[g_t]_i$ represents an average roll gap size at the i-th partition when the roll surface is partitioned every $\dfrac{l}{p}$ width in the roll width direction at moment $t$; $[g_t]$ is calculated based on an original radius of the fixed roll and the movable roll, a real-time horizontal displacement of the movable roll, the profile image of the fixed roll and the profile image of the movable roll.

5.  The real-time detection method for detecting throughput of a roller press according to claim 3, **characterized in that** step 2 further comprises calculating a cumulative throughput of the roller press within the time period $t_1 \sim t_2$, the formula is as follows:

$$\Delta Q = \sum_{i=0}^{\frac{t2-t1}{\Delta t}-1} Q_{t1+i \cdot \Delta t} \cdot \Delta t$$

wherein $Q_{t1+i \cdot \Delta t}$ represents a real-time throughput of the roller press at moment $t1+i \cdot \Delta t$. $\Delta t$ is a sampling period of the real-time detection system for detecting throughput of a roller press, the smaller $\Delta t$ is, the higher the calculation accuracy of $\Delta Q$ is.

Fig. 1

Fig. 2

Fig. 3

## INTERNATIONAL SEARCH REPORT

| International application No. |
|---|
| **PCT/CN2023/121842** |

| A. | CLASSIFICATION OF SUBJECT MATTER |
|---|---|

B02C4/02(2006.01)i; B02C4/30(2006.01)i; B02C4/28(2006.01)i; B02C25/00(2006.01)i

According to International Patent Classification (IPC) or to both national classification and IPC

| B. | FIELDS SEARCHED |
|---|---|

Minimum documentation searched (classification system followed by classification symbols)

IPC:B02C

Documentation searched other than minimum documentation to the extent that such documents are included in the fields searched

Electronic data base consulted during the international search (name of data base and, where practicable, search terms used)

CNTXT, ENTXTC, CNKI: 辊缝, 辊隙, 辊压, 辊压机, 通过量, 处理量, 滑, 测, 转动角, 角度, 速度, 位移, 修正, 调整, 调节;
VEN, ENTXT: roller, press, crush, detect, inspect, examine, examining, supervise, supervising, linear, speed, angle.

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116786202 A (CNBM (HEFEI) POWDER TECHNOLOGY EQUIPMENT CO., LTD. et al.) 22 September 2023 (2023-09-22) description, paragraphs 18-45, and figures 1-3 | 1-5 |
| A | CN 111250215 A (NANJING MEISHAN METALLURGY DEVELOPMENT CO., LTD. et al.) 09 June 2020 (2020-06-09) description, paragraphs 19-22, and figures 1-4 | 1-5 |
| A | CN 111239144 A (CNBM (HEFEI) POWDER TECHNOLOGY EQUIPMENT CO., LTD.) 05 June 2020 (2020-06-05) description, paragraphs 21-34, and figures 1-11 | 1-5 |
| A | CN 111402245 A (CNBM (HEFEI) POWDER TECHNOLOGY EQUIPMENT CO., LTD.) 10 July 2020 (2020-07-10) entire document | 1-5 |
| A | JP 2014173996 A (HITACHI POWER SOLUTIONS CO., LTD.) 22 September 2014 (2014-09-22) entire document | 1-5 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 March 2024** | **27 March 2024** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/121842** |

**C.**     **DOCUMENTS CONSIDERED TO BE RELEVANT**

| Category* | Citation of document, with indication, where appropriate, of the relevant passages | Relevant to claim No. |
| --- | --- | --- |
| A | US 4368165 A (MASCHINENFABRIK KOOPERN GMBH & CO. KG) 11 January 1983 (1983-01-11) <br> entire document | 1-5 |

Form PCT/ISA/210 (second sheet) (July 2022)

### INTERNATIONAL SEARCH REPORT
**Information on patent family members**

International application No.

**PCT/CN2023/121842**

| Patent document cited in search report | | | Publication date (day/month/year) | Patent family member(s) | | | Publication date (day/month/year) |
|---|---|---|---|---|---|---|---|
| CN | 116786202 | A | 22 September 2023 | None | | | |
| CN | 111250215 | A | 09 June 2020 | CN | 111250215 | B | 17 August 2021 |
| CN | 111239144 | A | 05 June 2020 | AU | 2021239037 | A1 | 23 December 2021 |
| | | | | AU | 2021239037 | B2 | 13 April 2023 |
| | | | | WO | 2021185009 | A1 | 23 September 2021 |
| | | | | EP | 3961554 | A1 | 02 March 2022 |
| | | | | CN | 212008354 | U | 24 November 2020 |
| CN | 111402245 | A | 10 July 2020 | WO | 2021185010 | A1 | 23 September 2021 |
| | | | | DE | 212021000130 | U1 | 28 April 2022 |
| JP | 2014173996 | A | 22 September 2014 | JP | 6025621 | B2 | 16 November 2016 |
| US | 4368165 | A | 11 January 1983 | DE | 2950072 | A1 | 19 June 1981 |
| | | | | DE | 2950072 | C2 | 16 September 1982 |
| | | | | JPS | 5695500 | A | 01 August 1981 |
| | | | | JPS | 607598 | B2 | 26 February 1985 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010203566X

- CN 111239144 A

**Non-patent literature cited in the description**

- **LU BAOSHAN.** Effectively controlling the throughput of a roller press to improve roller pressing efficiency [J. *Cement*, 2002, vol. 3, 3

- **SHEN XIRONG** ; **GU YUNTAO**. Application of hyperbolic feeding device in precise control of cyclic load of roller press system [J. *Cement Technology*, 2021 (2), 5